# EUROPEAN PATENT APPLICATION

(11) **EP 1 621 982 A2**
(43) Date of publication of application: **01.02.2006**
(21) Application number: 05014847.7
(22) Date of filing: 08.07.2005
(51) Int. Cl.: G06F 3/033

(54) **System and method for providing information**

(30) Priority: 21.07.2004 JP 2004213219
(71) Applicant: Hitachi, Ltd., Tokyo 100-8280 (JP)
(72) Inventor: Nagano, Hirofumi, Chiyoda-ku Tokyo 100-8220 (JP); Morita, Toshiyuki, Chiyoda-ku Tokyo 100-8220 (JP); Iguchi, Shinya, Chiyoda-ku Tokyo 100-8220 (JP); Saito, Fumio, Chiyoda-ku Tokyo 100-8220 (JP); Hirai, Ken, Chiyoda-ku Tokyo 100-8220 (JP); Numata, Miki, Chiyoda-ku Tokyo 100-8220 (JP); Nomura, Kaichi, Chiyoda-ku Tokyo 100-8220 (JP); Ariyoshi, Toshio, Chiyoda-ku Tokyo 100-8220 (JP)
(74) Representative: Strehl Schübel-Hopf & Partner

(57) **Abstract**

A poster (20) with an RF IC tag is adhered to a poster adhering unit (5). ID information of the poster is read from the RF IC tag with an RF IC tag reader (7) and sent to a control device (2). By using this tag ID information, the control device acquires detailed information on each of advertisement contents of the poster adhered to the poster adhering unit, from a contents server. As a user points out a position of the advertisement contents to which the user paid attention, the control device detects the pointed position from an output of ultrasonic sensors (8a, 8b), and provides the user with the detailed information by using a display (9) and a speaker (10) in a contents reproducing unit.

## Description

### BACKGROUND OF THE INVENTION

The present invention relates to an information providing system and method for providing a user with information on the information displayed on a notice medium such as a poster. More particularly, the present invention relates to an information providing system and method for providing a user with information on the information to which the user paid attention among information displayed on a notice medium, and being able to change information even if the notice medium is exchanged.

As a method for providing a user with related information on the information displayed on an advertisement medium such as a paper poster, it is known to adhere a wireless IC tag (RF ID tag) storing such related information to a poster.

In the description of JP-A-2002-162918, an RF IC tag storing related information on an advertisement object such as movies and goods displayed on a poster is adhered to a predetermined position of the poster. By setting a portable tag reader near to the poster, the related information stored in the RF IC tag is read, displayed on a display of a portable terminal and output to a printer.

In the description of JP-A-2002-268593, a wireless tag stores advertisement information for explaining goods on a poster in the form of texts, voice data, image data and the like. This wireless tag is adhered to the poster to allow the advertisement information to be read with a portable terminal. The advertisement information read from the wireless tag is displayed on a display and output from a speaker of the portable terminal. Information to be stored in a wireless tag includes not only advertisement information on a poster but also link information to related information corresponding to the advertisement information. The link information includes a uniform resource locator (URL) of a home page on the Internet, a telephone number of an inquiry site or the like. By reading URL from the wireless tag, the portable terminal can reserve advertised goods on the Internet. By reading the telephone number from the wireless tag, a user can inquire the advertised goods.

In the description of JP-A-2002-162918 and JP-A-2002-268593, the RF IC tag adhered to a poster stores related information on advertisement contents or link information to advertisement contents such as URL and telephone number, and a user having an IC tag reader or a portable terminal is provided with related information on advertisement contents on a poster. The advertiser can provide a user having interest in advertisement contents with information more than the information amount capable of being printed on a poster.

A touch panel display is widely used as an apparatus for receiving a user input to display information. Sensors are disposed on the screen surface of the touch panel display. As a user touches the screen with a hand, the sensors acquire information on the position touched with the hand. A control device processes this position information to judge the touch position and execute an operation suitable for the touch position. Since a user can intuitively operate such a touch panel display, it is widely adopted in public terminals used by a number of unidentified persons, such as ticket vending machines and ATMs.

It is known to use sensors as a method of receiving a user input to a real world object.

In the description of JP-A-2002-152620, when a user points out a desired particular area of an object in a poster such as pictures, maps and models, the position of the area is detected with a sensor. If an object is a picture, a sensor position detector is mounted at four corners of the picture attached on a table. When a user designates a desired position of the picture with a sensor, a sensor position detector detects a signal from the sensor to detect the position of the sensor on the picture, i.e., the position designated by the user, and the area around the detected position on the picture is displayed on a display in a magnified scale.

### SUMMARY OF THE INVENTION

According to JP-A-2002-162918 and JP-A-2002-268593, a user is required to possess an information terminal equipped with an RF IC tag reader in order to read desired information from an RF IC tag adhered to a poster. Users capable of using the poster are therefore limited.

Further, only the same information can be provided to users having interest in the advertisement contents. For example, even if users pay interest in different objects of the advertisement contents, only the same information is provided to the users and the information suitable for a particular object cannot be provided.

Furthermore, since only the information stored in an RF IC tag is provided, the information amount to be provided is limited.

Still further, even if link information to the related information such as URL and telephone number stored in the RF IC tag is used, the amount of the related information to be browsed is limited because of the restriction of a screen size of a portable terminal. In order to access the related information, it is necessary to read the link information from the RF IC tag and then access the link site, which is not easy to use.

A first object of the present invention is to provide an information providing system and method capable of providing a user having interest in a notice medium such as a poster, with desired information of large capacity contents without requesting the user to possess particular instruments.

The above-described touch panel display can be intuititively operated by a user to access display information. Since the display contents are controlled by a control device of the touch panel display, a user input can be recognized by referring to the display contents. However, if an information display medium is a real world object such as a paper poster, a user input cannot be recognized if the display contents are not recognized by a control device of the touch panel sensor.

Advertisement contents are required to be paid attention by a number of peoples so that the advertisement medium of a large size is required. However, if the touch panel display is used as the advertisement medium, since its cost per unit area is high, the effect per cost is lower than that of a paper poster.

According to the techniques described in JP-A-2002-152620, a user input (i.e., a user-designated input to a desired area of an object) is detected with the sensor added to a real world object such as a poster and a map. With this method, however, information to be displayed on a display in response to a user input is only a magnified image about the user-pointed position on the real world object, and can be displayed only if the real world object is the same as the displayed information. Namely, JP-A-2002-152620 does not disclose that different display contents are displayed for an object designated by a user input.

A second object of the present invention is to provide an information providing system and method capable of easily changing the information to be provided, when a notice medium is exchanged.

In order to achieve the first object of the present invention, a position detecting sensor is mounted on a billboard on which a notice medium is placed to detect an input position by a user on the notice medium. A control device stores contents information on the display contents of the notice medium mounted on the billboard, and information on a correspondence between the display contents and a position of the display contents on the notice medium and the contents information. A user is provided with the contents information on the display contents pointed out by the user on the notice medium mounted on the billboard.

In order to achieve the second object of the present invention, a notice medium is provided with an RF IC tag storing tag ID information for identifying the notice medium. An RF IC tag reader is mounted on a billboard. A control device reads the tag ID information of the notice medium from the RF IC tag of the notice medium mounted on the billboard, to thereby detect an exchange of the notice medium. When the notice medium is exchanged, the contents information and correspondence information between the position of the display contents and the contents information is changed to the information corresponding to the newly exchanged notice medium.

According to the present invention, a user having interest in an object among notice contents on a notice medium can be effectively provided with detailed information and related information of large moving image contents or the like corresponding to the user selected object.

Further, according to the present invention, even when a notice medium is exchanged, it is possible to automatically enter the state that detailed information and related information on the newly exchanged notice medium can be supplied to users, by reading an IC tag attached to the notice medium. Operation of information supply can be made easy.

Other objects, features and advantages of the invention will become apparent from the following description of the embodiments of the invention taken in conjunction with the accompanying drawings.

### BRIEF DESCRIPTION OF THE DRAWINGS

Fig. 1 is a diagram illustrating an information providing system and method according to an embodiment of the present invention.
Fig. 2 is a schematic diagram showing a specific example of a poster adhered to a poster adhering unit.
Fig. 3 is a schematic diagram showing a specific example of an RF IC tag adhered to the poster shown in Fig. 2.
Fig. 4 is a schematic diagram showing a specific example of a control device shown in Fig. 1.
Fig. 5 is a diagram showing a specific example of the data structure of mapping information shown in Fig. 4.
Fig. 6 is a flow chart illustrating a specific example of an information providing operation according to the embodiment illustrated in Fig. 1.
Fig. 7 is a schematic diagram showing a specific example of the internal structure of a contents server shown in Fig. 1.
Fig. 8 is a diagram showing a specific example of the data structure of a mapping information DB shown in Fig. 7.
Fig. 9 is a diagram showing a specific example of the data structure of tag mapping information shown in Fig. 7.
Fig. 10 is a flow chart illustrating a specific example of a poster exchanging operation according to the embodiment illustrated in Fig. 1.

### DETAILED DESCRIPTION OF THE EMBODIMENTS

Embodiments of the present invention will be described with reference to the accompanying drawings.

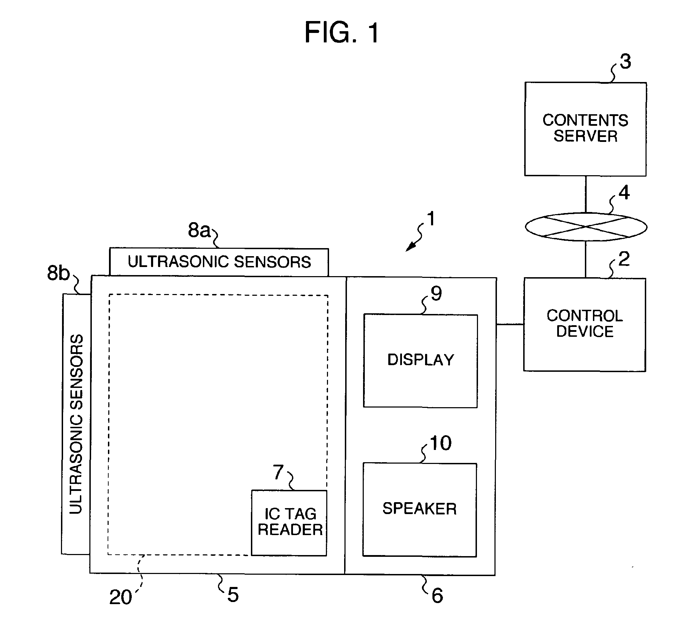

Fig. 1 is a diagram illustrating an information providing system and method according to an embodiment of the present invention. The information providing system includes an advertisement display apparatus 1, a control device 2, a contents server 3, a network 4, a poster adhering unit 5, a contents reproducing unit 6, a wireless (RF) IC tag reader 7, ultrasonic sensors 8a and 8b, a display 9, a speaker 10, and a poster 20. Although the RF IC tag reader 7 is used in the following description, a wired, i.e., contact type, IC tag may also be used.

In Fig. 1, the information providing system is constituted of the advertisement display apparatus 1 and the control unit 2 connected thereto, and is installed in public places. The advertisement display apparatus 1 is constituted of the poster adhering unit 5 and the contents reproducing unit 6. The poster adhering unit 5 is a billboard on which the poster 20 as an advertisement medium can be detachably put. The contents reproducing unit 6 reproduces information (contents information) on the poster adhered to the poster adhering unit 5. As will be later described, the control unit 2 stores therein detailed information and related information on the advertisement contents of the poster 20 adhered to the poster adhering unit 5.

The ultrasonic sensors 8a and 8b are mounted on adjacent two sides of the poster adhering unit 5. The ultrasonic sensors 8a and 8b constitute a position detecting device for detecting a position, designated (pointed out) by a user, on the poster adhering unit 5, i.e., on the poster 20 adhered to the poster adhering unit 5. An input position by the user is detected with the ultrasonic sensors 8a and 8b, and this input information by the user (i.e., information on a position pointed out by the user) is supplied to the control device 2.

The RF IC tag reader 7 is mounted at an arbitrary position of the poster adhering unit 5 (in this example, at a lower right corner of the poster adhering unit 5). The RF IC tag reader 7 reads information stored in an RF IC tag (not shown) mounted on the poster 20 adhered to the poster adhering unit 5. The read information is also supplied to the control device 2.

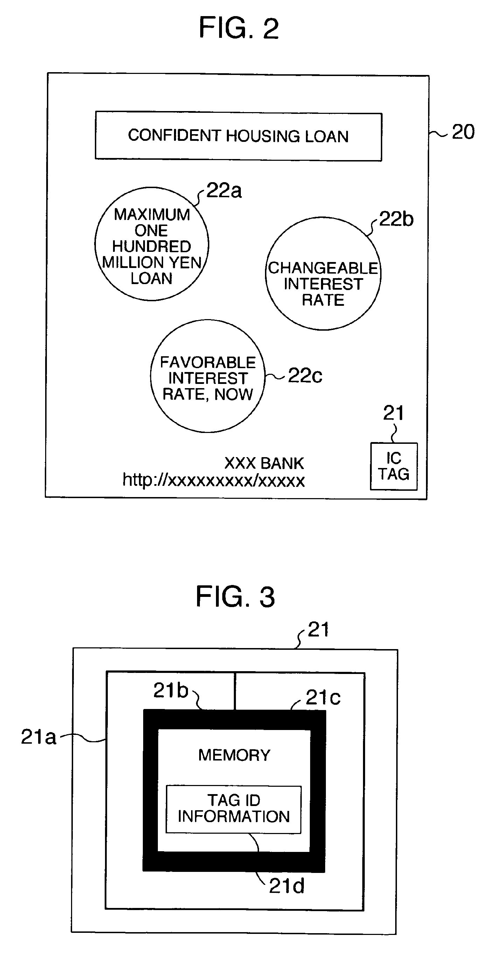

Fig. 2 is a schematic diagram showing a specific example of the poster 20. Reference numeral 21 represents an RF IC tag, and reference numerals 22a to 22c represent advertisement contents.

In Fig. 2, one or more advertisement contents 22a to 22c constituted of character strings such as sentences, images and the like are written in the poster 20, and the RF IC tag 21 is adhered to or set in the poster. The RF IC tag 21 is adhered to the poster at such a position as the RF IC tag 21 of the poster 20 can communicate with the RF IC tag reader 7 on the poster adhering unit 5 (Fig. 1), under the condition that the poster 20 is adhered to the poster adhering unit 5 (Fig.1) of the advertisement display apparatus 1 in a predetermined state.

Fig. 3 is a diagram showing a specific example of the internal structure of the RF IC tag reader 21 shown in Fig. 2, the RF IC tag reader being constituted of an antenna 21a, an IC chip 21b, a memory 21c and tag ID information 21d.

In Fig. 3, the RF IC tag 21 has the built-in antenna 21a and IC chip 21b. The IC chip 21b has the non-volatile memory 21c which stores the tag ID information 21d allowing the poster 20 (Fig. 2) with the adhered RF IC tag to be unanimously identified.

As the poster 20 (Fig. 2) is adhered to the poster adhering unit 5 of the advertisement display apparatus 1 shown in Fig. 1, the RF tag reader 7 reads the ID information 21d (Fig. 3) from the RF IC tag 21 of the poster 20, and supplies it to the control device 2. The control device 2 fetches the tag ID information 21d to recognize that the poster 20 assigned the tag ID information 21d is adhered to the poster adhering unit 5.

The poster has one or more advertisement contents. All or some of the advertisement contents are assigned information describing more in detail the advertisement contents with at least ones of images (including texts) and voices (hereinafter called detailed information) and information on the advertisement contents (hereinafter called related information). The detailed information and related information is stored in the control device 2. For example, as shown in Fig. 2, three advertisement contents 22a to 22c are given on the poster 20, the detailed information and related information is assigned to each of the contents, and the detailed information and related information is stored in the control device 2. In this case, the detailed information and related information is stored in correspondence with each of the advertisement contents, and this correspondence information (hereinafter called mapping information) is also stored in the control device 2. Used as the mapping information is information on the position of each of the advertisement contents 22a to 22c of the poster 20 (hereinafter called corresponding position information). The mapping information indicates, therefore, a correspondence between the corresponding position information and the detailed information and related information.

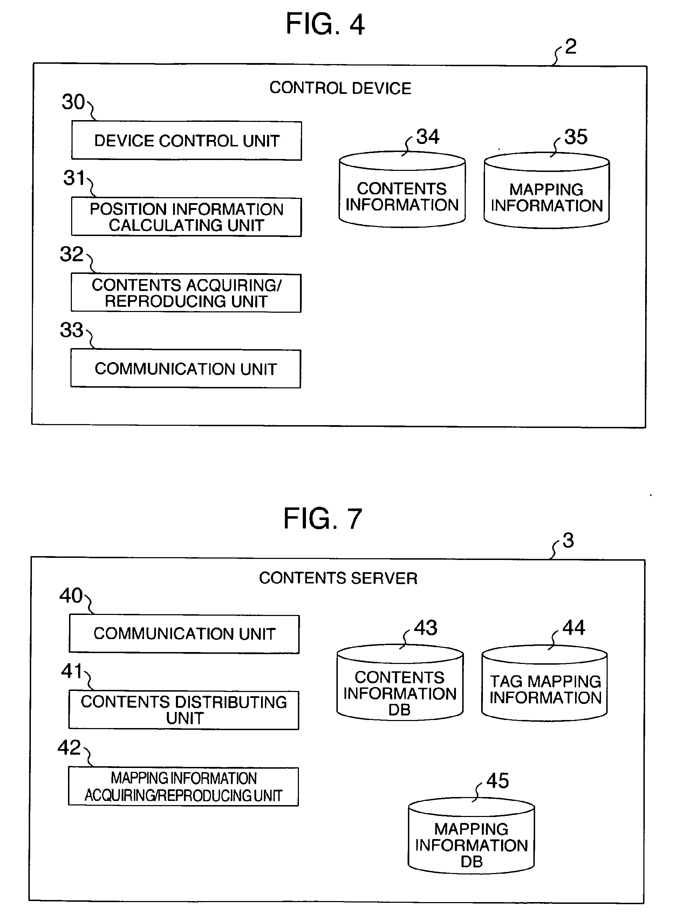

Fig. 4 is a diagram showing a specific example of the internal structure of the control device shown in Fig. 1. The control device is constituted of a device control unit 30, a position information calculating unit 31, a contents acquiring/reproducing unit 32, a communication unit 33, contents information 34 and mapping information 35.

In Fig. 4, the control device 2 is constituted of: the device control unit 30 for controlling each components of the control device; the position information calculating unit 31 for calculating corresponding position information from information signals output from the ultrasonic sensors 8a and 8b (Fig. 1) and supplied from the advertisement display apparatus 1, i.e., information input by a user; the contents acquiring/reproducing unit 32; and the communication unit 33 for communicating with the contents server 3 (Fig. 1). The detailed information and related information of each of the contents of the poster is stored as the contents information 34, and the mapping information 35 on each of the advertisement contents of the poster is also stored.

Referring to Fig. 1, as the poster 20 (Fig. 2) is adhered to the poster adhering unit 5 of the advertisement display apparatus 1, the RF IC tag reader 7 in the poster adhering unit 5 reads the tag ID information 21d (Fig. 3) from the RF IC tag 21 of the poster 20 and supplies it to the control device 2. In accordance with the tag ID information 21d supplied from the device control unit 30 shown in Fig. 4, the control device 2 acquires the contents information 34 and mapping information 35 corresponding to the tag ID information 21 (corresponding to the poster 20 having the tag ID information 21d) from the contents server 3 (Fig. 1). It is therefore possible for the control device 2 to supply the advertisement display apparatus 1 with the detailed information and related information on the advertisement contents 22a, 22b and 22c (Fig. 2) of the poster 20 adhered to the poster adhering unit 5 of the advertisement display apparatus 1, and the detailed information and related information can be reproduced with the display 9 and speaker 10 of the contents reproducing unit 6.

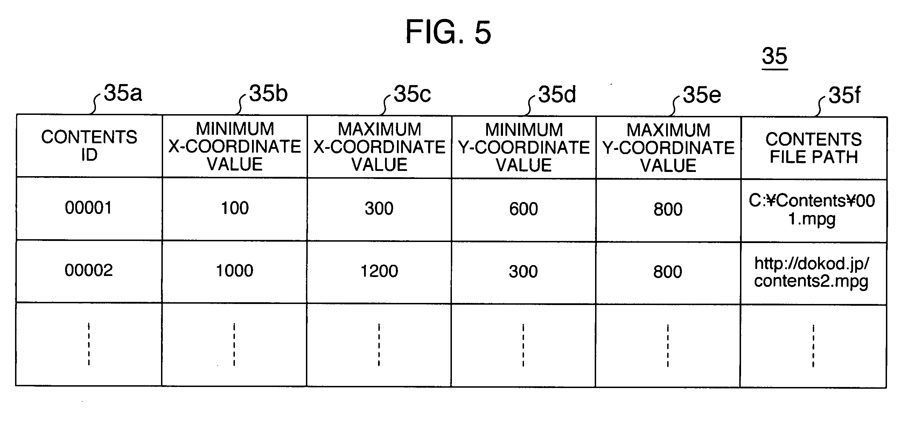

Fig. 5 is a diagram showing a specific example of the data structure of the mapping information 35 stored in the control device 2 (Fig. 4).

In Fig. 5, the mapping information 35 is constituted of records each corresponding to each contents information, the record being constituted of: a contents ID 35a for unanimously identifying a file of the contents information 34 (Fig. 4); information defining a range of the advertisement contents corresponding to the contents information identified by the contents ID 35a (including a minimum X-coordinate value 35b, a maximum X-coordinate value 35c, a minimum Y-coordinated value 35d and a maximum Y-coordinate value 35e); and a contents file path 35f.

As described above, the detailed information and related information (i.e., contents information) of each of the advertisement contents of the poster adhered to the poster adhering unit 5 of the advertisement display apparatus 1 is downloaded from the contents server 3 to the control device 2, as the contents information 34 (Fig. 4). Depending upon the advertisement contents, some contents information is remained in the content server 3. The contents file path 35f shown in Fig. 5 is a local file path of the contents information 34 downloaded to the control device 2, the local file path indicating the storage location of the contents information in the control device 2. For example, assuming that the contents information corresponding to the contents ID 35a of "00001" is stored in the control device 2, the contents file path 35f is a local file path of "C:¥Contents¥001.mpg". The contents file path 35f shown in Fig. 5 of the contents information left in the contents server 3 is an URL. For example, assuming that the contents information corresponding to the contents ID 35a of "00002" is left in the control device 2, the contents file path 35f is a URL "http://dokod.jp/Contents2.mpg".

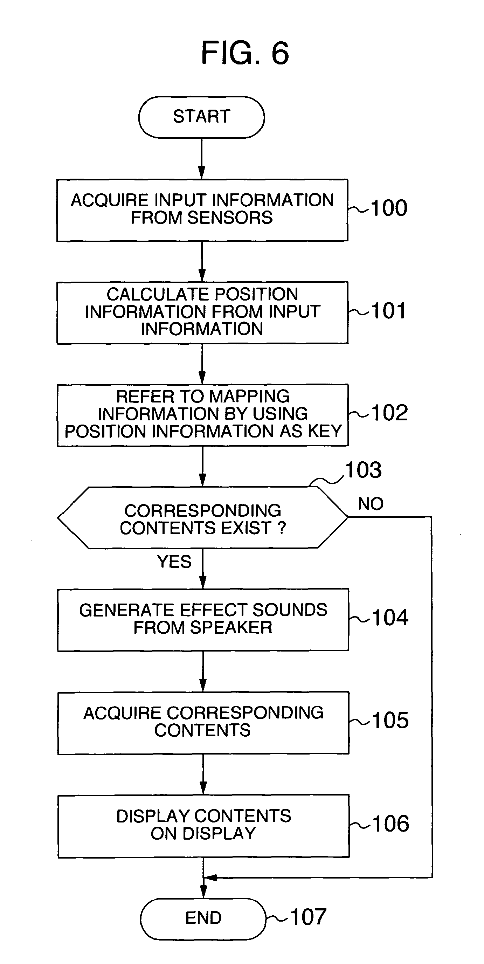

Next, with reference to the flow chart shown in Fig. 6, description will be made on an information providing operation to be executed when the poster 20 shown in Fig. 2 is adhered to the poster adhering unit 5 of the advertisement display apparatus 1.

It is assumed herein that the control device 2 is in the state that the contents information on the advertisement contents 22a to 22c of the poster 20 can be supplied to the advertisement display apparatus 1 and the mapping information 35 shown in Fig. 5 is stored in the control device 2. The record corresponding to the contents ID 35a of "00001" corresponds to the contents information of the advertisement contents 22a and the record corresponding to the contents ID 35a of "00002" corresponds to the contents information of the advertisement contents 22b.

As a user input occurs when the user points out, by touching or the like, the position on the poster 20 adhered to the poster adhering unit 5 of the advertisement display apparatus 1, the ultrasonic sensors 8a and 8b generate input information by the user and supply it to the control device 2 (Step 100 in Fig. 6).

Upon reception of the input information by the user, the position information calculating unit 31 of the control device 2 shown in Fig. 4 processes the input information to calculate a user input position (position pointed out by the user) on the poster 20 (Step 101 in Fig. 6), and refers to the mapping information 35 (Step 102 in Fig. 6) to search the contents information corresponding to the input position (Step 103 in Fig. 6). If the input position is outside the range defined by the range defining information 35b to 35e in the mapping information 35, it means that the record does not exist and the user pointed out an area other than the advertisement contents 22a to 22c of the poster 20, so that the process is terminated (Step 107 in Fig. 6).

If the input position by the user is in the range defined by the range defining information 35b to 35e of the records and the record corresponding to the mapping information 35 exists, i.e., the position pointed out by the user is in one of the advertisement contents (Step 103 in Fig. 6), the control device 2 sends a signal to this effect to the advertisement display apparatus 1. Upon reception of this signal, the advertisement display apparatus 1 makes the speaker 10 of the contents reproducing unit 6 to generate effect sounds to notify that the detailed information and related information on the advertisement contents pointed out by the user is reproduced (Step 104 in Fig. 6) .

After the notice signal is sent, the contents acquiring/reproducing unit 32 of the control unit 2 acquires the contents ID 35a and contents file path 35f of the record for which the user input position is in the range defined by the range defining information 35b to 35e, and in accordance with the acquired information, acquires the contents information on the advertisement contents of the poster 20 pointed out by the user, and sends it to the advertisement display apparatus 1 (Step 105 in Fig. 6).

After the user points out the advertisement contents 22a of the poster 20, the contents acquiring/reproducing unit 32 acquires as the contents file path 35f the local file path "C:¥Contents¥001.mpg" of the record of the mapping information 35 corresponding to the contents ID 35a of "00001", and in accordance with the local file path, acquires the contents information 24 on the advertisement contents 22a stored in the control device 2, and sends it to the advertisement display apparatus 1.

After the user points out the advertisement contents 22b of the poster 20, the contents acquiring/reproducing unit 32 acquires as the contents file path 35f the URL "http://dokod.jp/Contents2.mpg" of the record of the mapping information 35 corresponding to the contents ID 35a of "00002", and transmits the URL from the communication unit 33 to the contents server 3 via the network 4. The contents information on the advertisement contents 22b is therefore distributed from the contents server 3. Immediately after this contents information is received at the communication unit 33, the contents acquiring/distributing unit 32 performs streaming to send the contents information to the advertisement display apparatus 1.

In the advertisement display apparatus 1, as the contents information is sent from the control device 2, its image information and text information is displayed on the display 9 of the information reproducing unit and its voice information is reproduced by the speaker 10 (Step 106 in Fig. 6).

In this manner, the advertisement display apparatus is installed at a station concourse, a tenant building and the like to first draw attention of a number of unspecified persons by using the poster 20 made of paper, and then to provide information by the display 9 and speaker 10 to a user having interest in the poster and coming near to the poster 20. As the user stands in front of the poster 20 and points out, by waving a hand or the like, the advertisement contents of the poster 20 the user paid attention, the advertisement display apparatus 1 acquires the position pointed out with the hand by using the ultrasonic sensors 8a and 8b, and provides the detailed information and related information on the advertisement contents at the position pointed out, by using the display 9 and speaker 10. A user attention can be drawn more by providing a sign of responding the user access by generating effect sounds from the speaker 10 when the user pointed out a particular area of the poster 20, or by other approaches.

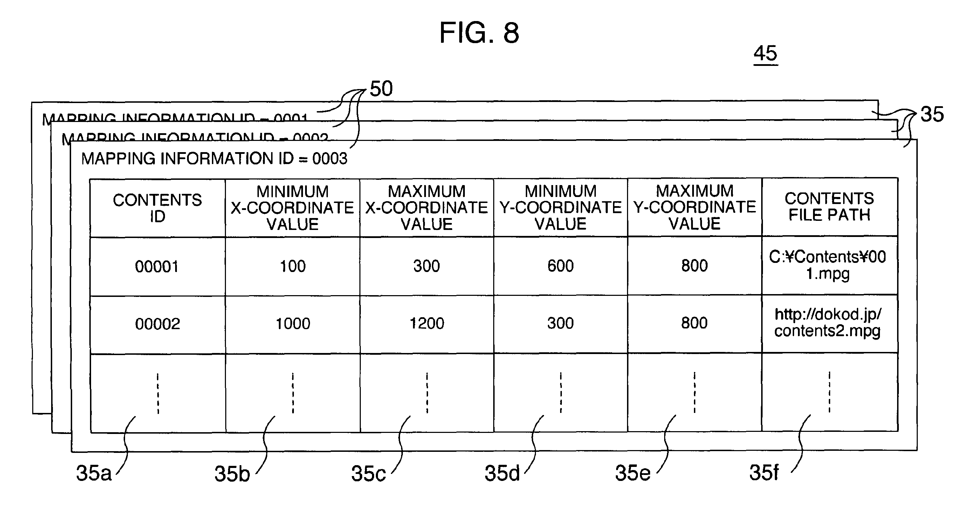

Fig. 7 is a diagram showing a specific example of the internal structure of the contents server 3 shown in Fig. 1. Reference numeral 40 represents a communication unit, reference numeral 41 represents a contents distributing unit, reference numeral 42 represents a mapping information acquiring unit, reference numeral 43 represents a contents information database (DB), reference numeral represents mapping information 44 and reference numeral 45 represents a mapping information DB.

In Fig. 7, the contents server 3 is constituted of the communication unit 40 for communication with the control device 2 (Figs. 1 and 4), the contents distributing unit 41, mapping information acquiring unit 42, contents information DB 43 and mapping information DB 45. The tag mapping information 44 is stored in the contents server. The contents information DB 43 stores the contents information of each poster, and the mapping information DB 45 stores the mapping information of each poster.

Fig. 8 is a diagram showing a specific example of the mapping information DB 45.

In Fig. 8, the mapping information DB 45 stores the mapping information 35 on each poster, and a mapping information ID 50 is assigned to the mapping information on each poster. In the example shown in Fig. 8, three pieces of the mapping information 35 are shown and the mapping information IDs "0001", "0002" and "0003" are assigned. Similar to the mapping information shown in Fig. 5, the mapping information 35 is constituted of a content ID 35a, range defining information 35b to 35e and a content file path 35f.

The contents information DB 43 shown in Fig. 7 stores the contents information on each poster. Although not shown, a contents ID is assigned to each contents information. This contents ID is coincident with the contents ID 35a assigned to the mapping information corresponding to the contents information with the contents ID. In this manner, the contents information can be related to the corresponding mapping information.

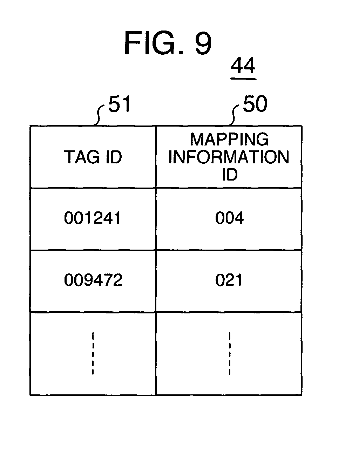

As shown in Fig. 9, the tag mapping information 44 shown in Fig. 7 is information indicating a correspondence between a tag ID 51 assigned to each poster to be adhered to the poster adhering unit 5 of the advertisement display apparatus 1 and a mapping information ID 50. The tag ID 51 is coincident with the tag ID information 21d (Fig. 3) stored in the RF ID tag 21 (Fig. 2) on the poster 20.

As the poster 20 to be adhered to the poster adhering unit 5 of the advertisement display apparatus 1 is created and the contents information (detailed information and related information) on the advertisement contents 22a to 22c (Fig. 2) of the poster are created, the tag ID information 21d (Fig. 3), the range defining information 35b to 35e of the advertisement contents 22a to 22c, the contents information and the like stored in the RF IC tag 21 adhered to the poster 20 are input (registered) in the contents server 3 (Fig. 7).

In the contents server 3, a control unit and the like (not shown) assign the contents ID 35a to each contents information on the advertisement contents 22a to 22c of the poster 20, and the contents information is stored in the contents information DB 43. The input tag ID information 21d of the poster 20 is assigned the mapping information ID 50 as the tag ID 51, and the tag mapping information 44 on the poster 20 is created as shown in Fig. 9. For each contents information on the advertisement contents 22a to 22c of the poster 20, the mapping information 35 is created including the contents ID 35, the input range defining information 35b to 35e of the advertisement contents 22a to 22c and the contents file path 35f representative of the storage location of the contents information. The mapping information assigned the mapping information ID 50 of the poster 20 is stored in the mapping information DB 45. As a poster 20 to be adhered to the poster adhering unit 5 of the advertisement display apparatus 1 is newly created, the contents information and mapping information is stored in the contents information DB 43 and mapping information DB 45, respectively. At the same time, the tag mapping information 44 is generated and stored, the tag mapping information indicating a correspondence between the newly created poster and the contents information and mapping information.

For the contents information stored in the contents information DB 43, a local file path capable of being searched in the control device 2 is used for the contents file path 35f (Fig. 8) for the contents information downloaded from the contents server 3 to the control device 2 in response to a request to be described later issued from the control device when a new poster is adhered to the poster adhering unit 5 of the advertisement display apparatus, whereas a URL allowing the control device to access the contents server 3 is used for the contents file path 35f for the contents information not downloaded to the control device 2 but left in the contents information DB 43 of the contents server 3.

When the poster 20 is exchanged on the poster adhering unit 5 of the advertisement display apparatus 1, the control device 2 detects this and requests the contents information and mapping information 35 of the newly adhered poster to the contents server 3, and the contents information of the poster 20 can be provided to the user at the contents reproducing unit 6 of the advertisement display apparatus 1.

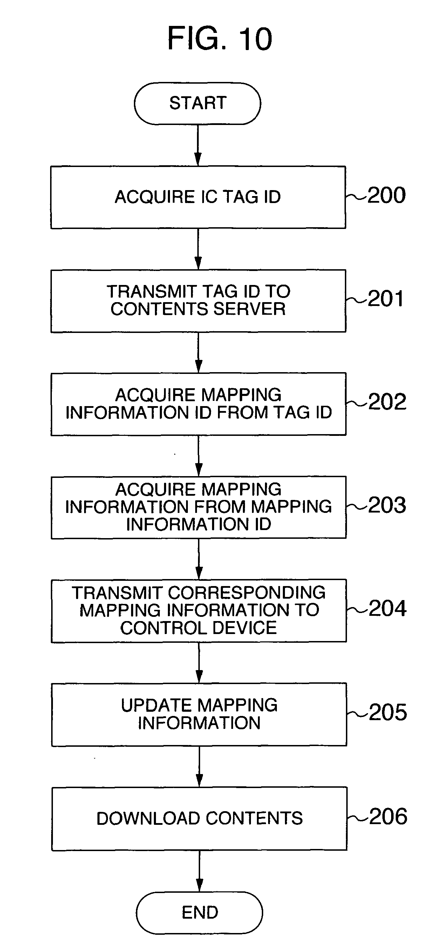

Fig. 10 is a flow chart illustrating a specific example of the operation of an embodiment to be executed when the poster 20 on the poster adhering unit 5 of the advertisement display apparatus 1 is exchanged.

The control device 2 may read always a read signal of the RF IC tag reader 7 (Fig. 1) mounted on the poster adhering unit 5 of the advertisement display apparatus 1 or may read it at a predetermined time. In the latter case, for example, in the case in which the advertisement display apparatus 1 is installed at the position such as a business building where peoples exist only during a predetermined time period in a day and the poster 20 is exchanged late in the evening, the read signal of the RF IC tag reader 7 (Fig. 1) may be read always during a predetermined time period before peoples start coming in and going out the business building such as one hour before the business time.

As the poster on the poster adhering unit 5 of the advertisement display apparatus 1 is exchanged, the tag ID information 21d (Fig. 3) is read from the RF ID tag 21 (Fig. 2) of the newly exchanged poster 20, and sent to the control device 2 (Step 200 in Fig. 10). The control device 2 reads this tag ID information 21d and sends it from the communication unit 33 (Fig. 4) to the contents server 3 via the network 4 (Fig. 1) (Step 201 in Fig. 10).

The communication unit 40 shown in Fig. 7 of the contents server 3 receives the tag ID information. By using the tag ID information 21d as the tag ID 51, the mapping information acquiring unit 42 acquires the corresponding mapping information ID 50 from the tag mapping information 44 (Step 202 in Fig. 10). In accordance with the mapping information ID 50, the mapping information acquiring unit acquires the mapping information 35 for the new poster 20 from the mapping information DB 45 (Fig. 8) (Step 203 in Fig. 10). The mapping information 35 is sent from the communication unit 40 to the control device 2 via the network 4 (Fig. 1) (Step 204 in Fig. 10). In the control device 2 shown in Fig. 2, the communication unit 33 receives the mapping information 35 to update it (Step 205 in Fig. 10).

In the contents server 3 shown in Fig. 7, the mapping information acquiring unit 42 acquires the mapping information 35 for the new poster 20 from the mapping information DB 45. Then, in accordance with the contents ID 35a and contents file path 35f in the mapping information 35, the contents distributing unit 41 searches the contents information whose contents file path 35f is the local file path from the contents information DB 43. The acquired contents information is downloaded from the communication unit 40 to the control device 2 shown in Fig. 2 via the network 4. In the control device 2, the downloaded contents information is received at the communication unit 33 and the contents information 34 is updated to the received contents information (Step 206 in Fig. 10).

In this manner, the contents information 34 and mapping information 35 for the newly exchanged poster 20 is set to the control device 2. In response to a user input (pointing out) relative to the newly exchanged poster 20 on the poster adhering unit 5 of the advertisement display apparatus 1, the contents reproducing unit 6 of the advertisement display apparatus 1 can provide the user with the advertisement contents (detailed information and related information) of the poster 20.

In this embodiment, even if the poster on the poster adhering unit 5 of the advertisement display apparatus 1 is exchanged, it is possible to enter the state that the detailed information and related information on the advertisement contents of the newly exchanged poster can be provided to the user.

In the above-described embodiments, although a paper poster is used as the notice medium, the present invention is not limited thereto, but notice media may be an exchangeable signboard and the like.

The notice contents may be a guide, a map and the like of a shop or an exhibition in addition to advertisements.

It should be further understood by those skilled in the art that although the foregoing description has been made on embodiments of the invention, the invention is not limited thereto and various changes and modifications may be made without departing from the spirit of the invention and the scope of the appended claims.

## Claims

1. An information providing system comprising:
a board (5) for disposing an external notice medium;
a sensor (8a, 8b) for detecting an input to said external notice medium;
an output device (6) for outputting related contents of notice contents in said external notice medium;
a control device (2) for controlling said board and said output device; and
a server (3) for managing said related contents,
wherein said control device comprises:
a storage module (35) for storing a first correspondence between a position of said notice contents in said external notice medium and said related contents;
a calculation module (31) for calculating a position of said input to said external notice medium in accordance with an output from said sensor;
a search module (32) for searching related contents corresponding to the position of said input supplied from said calculation module, from said storage module, in accordance with said first correspondence in said storage module; and
an output module (32) for making said output device to output said related contents supplied from said search module.

2. The information providing system according to claim 1, further comprising:
a read device (7) for reading an ID of said external notice medium from an external storage medium adhered to said external notice medium,
wherein said storage module of said control device further stores a second correspondence between said ID of said external notice medium to be put on said board and said first correspondence; and
said search module of said control device searches from said storage module the first correspondence corresponding to said ID supplied from said read device, by referring to said second correspondence in said storage module, and searches related contents corresponding to said position supplied from said calculation module by referring to said first correspondence.

3. The information providing system according to claim 2, wherein
said control device includes a transmission module (33) for transmitting said ID supplied from said read device to said server,
wherein said server comprises:
a storage module (43, 44, 45) for storing related contents and said first and second correspondences corresponding to each external notice medium;
a reception module (40) for receiving said ID from said control device;
a search module (42) for searching said first correspondence corresponding to said ID, from said storage module in said server, by referring to said second correspondence in said storage module in said server; and
a transmission module (41) for transmitting said first correspondence supplied from said search module in said server to said control device,
and wherein said control device further comprises:
a reception module (32) for receiving said first correspondence supplied from said server; and
an update module for updating said first correspondence in said storage module in accordance with said first correspondence supplied from said reception module.

4. The information providing system according to claim 3,
wherein said search module (42) of said server searches said related contents corresponding to said ID supplied from said reception module, from said storage module in said server,
said transmission module (41) of said server transmits said related contents supplied from said search module to said control device,
said reception module (32) of said control device receives said related contents from said server, and
said update module of said control device updates said related contents in said storage module, in accordance with said contents supplied from said reception module.

5. An information providing system comprising:
a board (5) for disposing an external notice medium;
a sensor (8a, 8b) for detecting an input to said external notice medium;
an output device (9, 10) for outputting related contents of notice contents in said external notice medium;
a device (2) for controlling said board and said output device; and
a server (3) for managing said related contents,
wherein said control device comprises:
a storage module (34, 35) for storing a first correspondence between a position of said notice contents in said external notice medium and a reference destination of said related contents;
a calculation module (31) for calculating a position of said input to said external notice medium in accordance with an output from said sensor;
a search module (30) for searching a reference destination of related contents corresponding to the position of said input supplied from said calculation module, from said storage module, in accordance with said first correspondence in said storage module;
an acquisition module (32) for acquiring said related contents by accessing the reference destination of said related contents supplied from said search module; and
an output module (33) for making said output device to output said related contents supplied from said search module.

6. An information providing method for outputting related contents corresponding to notice contents on an external notice medium (20) on a board (5), comprising:
a first step of detecting an input to said external notice medium;
a second step of calculating a position of said input to said external notice medium in accordance with a detection result;
a third step of identifying related contents corresponding to the position of said input by referring to a first correspondence between a position of said related contents in said external notice medium and said related contents; and
a fourth step of outputting said related contents to said output device.

7. The information providing method according to claim 6, further comprising:
a fifth step of reading an ID of said external notice medium from an external storage medium adhered to said external notice medium;
a sixth step of transmitting said read ID to a server;
a seventh step of receiving said first correspondence corresponding to said ID from said server; and
an eighth step of updating said already stored first correspondence in accordance with said received first correspondence.

8. The information providing method according to claim 7, further comprising:
a ninth step of receiving all related contents written in said first correspondence from said server.

9. An information providing method for outputting related contents corresponding to notice contents on an external notice medium (20) on a board (5), comprising:
a first step of detecting an input to said external notice medium;
a second step of calculating a position of said input to said external notice medium in accordance with a detection result;
a third step of identifying a reference destination of related contents corresponding to the position of said input by referring to a first correspondence between a position of said related contents in said external notice medium and a reference destination of said related contents;
a fourth step of acquiring said related contents by accessing the reference destination of said identified related contents; and
a fifth step of outputting said acquired related contents to said output device.

10. An information providing system for displaying a poster, comprising:
a board (5) for detachably displaying said poster; and
a display device (9) disposed adjacent to said board,
wherein said display device displays related contents corresponding to notice contents designated by a user from notice contents in said poster.

11. An information providing system comprising:
a device (5) for disposing an external notice medium (20);
a read device (7) for reading an ID of said external notice medium from said external notice medium;
a display device (9) for displaying related contents corresponding to notice contents in said external notice medium;
a storage device for storing said ID, a notice position of said notice contents on said external notice medium, and said related contents;
a detection device for detecting a position designated by a user on said external notice medium; and
a device for searching said related contents from said storage device in accordance with said ID supplied from said read device and said position designated by the user on said external notice medium and supplied from said detection device, and
transmitting said searched contents to said display device.
